# EUROPEAN PATENT APPLICATION

(11) **EP 2 343 854 A2**
(43) Date of publication of application: **13.07.2011**
(21) Application number: 10195417.0
(22) Date of filing: 16.12.2010
(51) Int. Cl.: H04L 12/24

(54) **System and a method for determining an optimal restoration connection**

(30) Priority: 12.01.2010 FR 1050182
(71) Applicant: Alcatel Lucent, 75007 Paris (FR)
(72) Inventor: Verchere, Dominique, 91620, NOZAY (FR); Morea, Annalisa, 91620, NOZAY (FR)
(74) Representative: Keseris, Denis

(57) **Abstract**

A system and method for determining, within a communication network (1), a restoration connection (C2" ') at least partially replacing an original connection (C2) interrupted by a failure (N7-N11), comprising the steps of:
- determining from among the nodes (N2, N5, N7) of said original connection (C2) located upstream of the interruption (N7-N11) an input node (N5) of said restoration connection (C2") which minimizes a restoration time,
- determining from among the nodes (N11, N13) of said original connection (C2) located downstream of the interruption (N7-N11), an output node (N11) of said restoration connection (C2" ') which minimizes a restoration time,
- determining a restoration connection (C2"') linking said input node (N5) to said output node (Nil) while bypassing the broken-down node/link (N7-N11).

## Description

The present invention concerns a method for determining a restoration connection within the communication network, in the presence of a failure creating an interruption in an original connection.

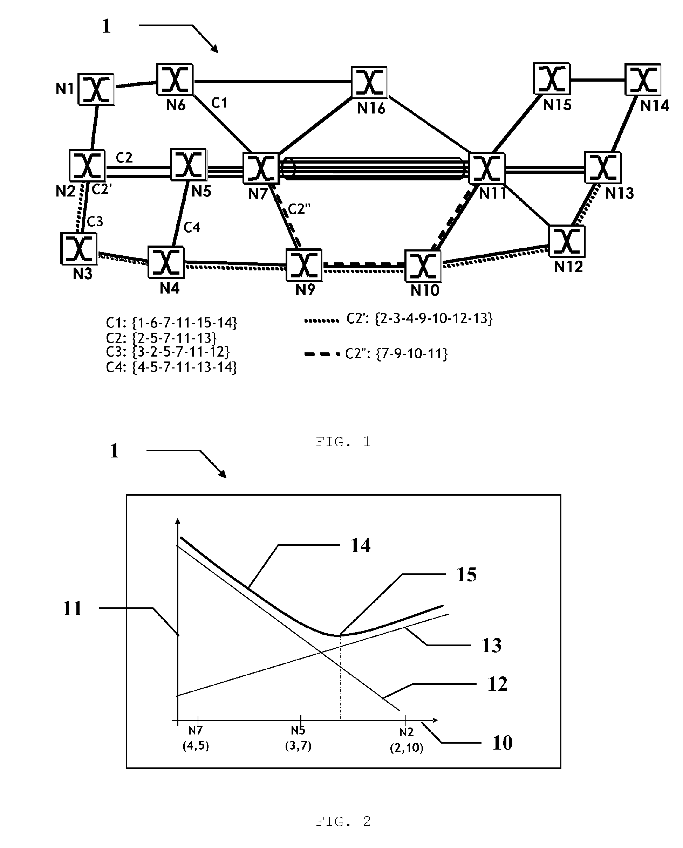

As depicted in Figure 1, a typical communication network 1 comprises any number of nodes N1-N16 connected by communication links, shown as dashes. In such a communication network, connections C1-C4 are established. A connection comprises a continuous, alternating ordered oriented succession of nodes and links forming a path. A connection links a source node and a destination node via a succession of intermediate nodes.

Thus, for example, the connection C2 comprises in order: the nodes N2, N5, N7, N11, and N13. N2 is the source node, N13 the destination node, and N5, N7, N11 are intermediate nodes.

The invention may be applied in any communication network for which the network control functions are distributed across multiple nodes of the network, such as a network made up of nodes comprising a MPLS or GMPLS controller: IP/MPLS router, Ethernet Switch, or GMPLS Wavelength Cross-Connect. Thus, for a MPLS signaling protocol, a connection is a LSP (Label Switch Path). Such a connection is, for example, configured by means of a signaling protocol such as RSVP-TE or CR-LDP or any other similar protocol.

Whenever a breakdown occurs in such a network, such a breakdown resulting for example from the failure of a node, or the failure of a link, subsequent to an outage or any event leading to an inability to transmit via that node or that link with an acceptable level of quality, a connection traveling via that node or that link is interrupted.

In order to be able to continue transmitting data between the source node and the destination node, said connection should be restored, preferably quickly, by a restoration connection. It has been proposed to restore such a connection globally, locally, or in segments.

Referring by way of example to Figure 1, the breakdown is assumed to make the link N7-N11 connecting the nodes N7 and N11 unusable. Thus, this breakdown creates an interruption between the node N7 and the node N11 and interrupts all connections comprising said link N7-N11 within their path, i.e. in our example, the connections:
C1: N1-N6-N7-N11-N15-N14,
C2: N2-N5-N7-N11-N13,
C3: N3-N2-N5-N7-N11-N12,
C4: N4-N5-N7-N11-N13-N14,

In the event of a breakdown, a global restoration offers a restoration connection replacing the original connection end-to-end, by creating a complete restoration connection between the source node and the destination node. Thus, said restoration connection comprises an input node that is identical to the source node, and an output node that is identical to the destination.

A global restoration of the connection C2 according to the example thereby proposes a restoration connection between the source node N2 and the destination node N13, for example by means of the restoration connection C2': N2-N3-N4-N9-N10-N12-N13.

One drawback of this global approach is particularly apparent for long lengths (as in continental-scale networks, for example) for which both the breakdown signaling time from the node that detects the failure to the restoration node to be configured (input node or output node), and additionally the activation time of said restoration connection's nodes, are no longer negligible and run up the total restoration time. The node that detects the breakdown is generally located in the immediate vicinity of the breakdown.

In contrast, a local restoration offers a restoration connection that replaces the original connection as close as possible to the broken-down link/node, by creating a bypass close to the breakdown. In this situation, the restoration connection is partial. Said restoration connection comprises an input node that is identical to the last node before the interruption along the original connection's path in its direction of travel, and an output node that is identical to the first node after the interruption along the original connection's path, in its direction of travel. In the event of a link breakdown, the input and output nodes are respectively the two nodes closest to the endpoint nodes of the damaged link.

A local restoration of the connection C2 according to the example thereby proposes a restoration connection creating a bypass between N7 and N11, such as by means of the restoration connection C2": N7-N9-N10-N11.

Such a local scheme has the advantage of being faster to implement, owing to the closeness between the node detecting the breakdown and the restoration nodes to be configured and activated. However, owing to this very closeness between the restoration nodes and the breakdown, a greater number of connections selected to be interrupted by said breakdown travel through the restoration node. The result is a significant increase in the processing load related to restoration for that node, causing a harmful waste of time.

In order to optimize a restoration between the two aforementioned extreme approaches, it has recently been proposed to create a segmented restoration. A segmented restoration offers a compromise between the two aforementioned approaches, by once again offering a partial restoration connection. However, said restoration connection comprises an input node chosen from among the original connection's nodes between the source node and the last node before the interruption along the original connection's path, in its direction of travel, i.e. among the nodes downstream of the interruption, and an output node chosen from among the original connection's nodes between the first node after the interruption along the original connection's path, in its direction of travel, and the destination node, i.e. among the nodes downstream of the interruption.

It may be noted, for a partial restoration connection (local or segmented), that the restoration connection may advantageously be completed, upstream by an initial connection linking the source node to the input node of the restoration connection and coinciding with the original connection, and downstream by a final connection linking the output node of the restoration connection to the destination node and coinciding with the original connection.

Thus, in the example, for the original connection C2, the partial restoration connection C2": N7-N9-N10-N11 is advantageously completed by N2-N5-N7 and by a final connection N11-N13, in order to create an end-to-end connection having the same source node N2 and the same destination node N13 as the original connection C2.

Configuration and communication modes for such segmented restorations have been proposed: IETF RFC 4873, May 2007.

However, nothing in the prior art has specified how to choose said input and output nodes of the restoration connection.

Within that framework, the present invention discloses a method for determining a segmented restoration connection optimizing the implementation time of the restoration of connection.

The object of the invention is a method for determining, within a communication network comprising nodes connected by links and within which a connection comprises a continuous and alternating succession of nodes and links connecting a source node and the destination node, a restoration connection at least partially replacing an original connection interrupted by a breakdown of one of its nodes or links, comprising the steps of:
- determining an input node of said restoration connection from among the nodes of said original connection located upstream of the interruption,
- determining an output node of said restoration connection from among the nodes of said original connection located downstream of the interruption,
- determining a restoration connection linking said input node to said output node, bypassing the broken-down node/link,
wherein said restoration connection's input node is the candidate node which minimizes a restoration time,
and wherein said restoration connection's output node is the candidate node which minimizes a restoration time.

The restoration time for a node is estimated by adding a restoration processing time to a restoration order propagation time.

The restoration processing time is estimated by means of an increasing function of the node's control load.

According to another characteristic of the invention, the node's control load is indicated by the number of connections to restore travel through said node.

The restoration order's propagation time is estimated by means of increasing function of the length of the path used for the reporting of the breakdown and the length of the restoration connection.

According to another characteristic of the invention, the length of the reporting path and the length of the restoration connection are indicated by the number of nodes or links that make up said path or said connection.

According to another characteristic of the invention, the restoration time for a given node is calculated by means of a function R(x,y1,y2)=Ax+By1 +Cy2, where
- x is the number of connections to be restored traveling through said node and
- y1 is the number of nodes or links that make up the path used for reporting the breakdown,
- y2 is the number of nodes or links that make up the restoration connection,
- A is a number indicative of a processing time of the connection to be restored,
- B is a number indicative of a transmission time to a neighboring node of a breakdown notification,
- C is a number indicative of a configuration time of a node of a restoration connection.

A further object of the invention is a system for determining, within a communication network comprising nodes connected by links and within which a connection comprises a continuous and alternating succession of nodes and links connecting a source node and the destination node, a restoration connection at least partially replacing an original connection interrupted by a breakdown of one of its nodes or links, comprising:
- determining an input node of said restoration connection from among the nodes of said original connection located upstream of the interruption,
- determining an output node of said restoration connection from among the nodes of said original connection located downstream of the interruption,
- a means of determining a restoration connection linking said input node to say at that node bypassing the broken-down nodes/link, wherein the means of determining an input node is capable of selecting the candidate node that minimizes a restoration time, and wherein the means of determining an output node is capable of selecting the candidate node that minimizes a restoration time.

Other characteristics, details, and advantages of the invention will become more clearly apparent from the detailed description given below by way of example with reference to the drawings, in which:
- Figure 1 illustrates an example network, showing 4 connections and one broken-down link,
- Figure 2 is a graph for determining an optimal restoration node,
- Figure 3 illustrates, within the network of Figure 1, an optimal restoration connection obtained by the method.

Figure 1, already described in detail, shows a typical communication network 1 composed here of 16 nodes N1-N16, connected by communication links, shown as dashes. In this communication network 1, as an example, 4 connections C1-C4 have been established. Thus, for example, the connection C2 comprises in the direction it travels: nodes N2, N5, N7, N11 and N13. N2 is the source node, N13 the destination node, and N5, N7, N11 are intermediate nodes. This is summarized by the notation C2: N2-N5-N7-N11-N13 or C2: {2-5-7-11-13}. This means there are 4 connections defined by: C1: N1-N6-N7-N11-N15-N14, C2: N2-N5-N7-N11-N13, C3: N3-N2-N5-N7-N11-N12, C4: N4-N5-N7-N 11-N 13-N 14.

It is assumed for the example that the breakdown is caused by a link, and that this link is the link N7-N11, shown as a cylinder at the center of the figure. Thus, this breakdown interrupts all connections comprising said link N7-N11 within their path, i.e. in the example, the connections C1, C2, C3, and C4.

Also shown in Figure 1, for the connection C2, is a restoration connection C2': N2-N3-N4-N9-N10-N12-N13 according to the global scheme and a restoration connection C2": N7-N9-N10-N11 according to the local scheme.

One important characteristic of the invention is considering the restoration time to be an important parameter, i.e. the total time needed to implement a restoration connection, from when a breakdown/interruption is detected by a node generally close to said interruption until the configuration of the restoration nodes (input node and output node of the restoration connection), and if need be, of all nodes of the restoration connection, including the actual determination of said restoration nodes.

The object of the invention is a method that determines an input node of the restoration connection chosen from among the nodes of the original connection located upstream of the interruption and an output node of the restoration connection chosen from among the nodes of the original connection located downstream of the interruption, said nodes optimizing the restoration time.

Many factors are involved in producing the total restoration time. After researching the matter, it became possible to separate factors which heavily contribute to the restoration time and others which are secondary or negligible. Two major factors were thereby identified: a processing time and a propagation time.

As mentioned in the foreword, the local scheme, by reducing the distances between the node detecting the breakdown and the nodes to be configured to create a restoration connection, advantageously reducing a propagation time related to the propagation along the network of the information needed to implement the restoration However, owing to this very proximity of a restoration node to the breakdown, that node is traversed by a greater number of connections altered by the breakdown. This potentially causes an increase in a processing time, related to the number of connections whose restoration must be processed by said node.

On the other hand, the global scheme reduces processing time, but increases propagation time.

One of the ideas of the invention is employing a segmented scheme in order to find an intermediate compromise. Thus, between the source node and the last node before the breakdown, or respectively between the first node after the breakdown and the destination node, may be found an input node of the restoration connection, or respectively an output node of the restoration connection, which reaches the best compromise between these two trends by optimizing the sum of these two times, the propagation time and the processing time.

The restoration processing time may combine multiple contributions. However, the most important of these contributions is related to processing, within the node in question, the restoration of the various original connections to travel via this node and which must be restored owing to the breakdown. According to one characteristic of the invention, it is assumed that the processing time is an increasing function of said node's control load. With respect to the restoration time of an original connection, this control load is an increasing function of the number of failed connections that travel through said node and which said node must restore.

According to an initial approximation, the processing time is a linear function of the number of connections to be restored. However, it is possible to refine the model using other functions, for example to account for saturation.

Besides the processing time, another major contribution to the restoration time is the propagation time.

The propagation time comprises the sum of all times related to transmitting information or configuration orders related to the restoration of an original connection subsequent to a breakdown. Two contributions to this propagation time may be distinguished: first, the time taken to travel the path used to inform a restoration node and second, the time taken to travel the restoration connection segment.

The breakdown notification path links a node detecting the breakdown to the candidate node under consideration to be a restoration node (input node or output node). The node detecting the breakdown is most commonly a node adjacent to the broken-down node or link, such as the node immediately downstream or immediately upstream of the broken-down node or link. The breakdown notification path must obviously bypass the broken-down node or link.

In the example used above, the breakdown-detecting node is typically node N11.

Once the restoration node is notified of the breakdown, the nodes of the restoration connection segment should be configured/activated. This brings us to considering a second contribution to propagation time, related to the configuration of said segment of the restoration connection. This time corresponds to said restoration connection segment's travel time in order to activate it, from the node in question (input node) to the output node.

This configuration can only be made after the node in question has been notified. Consequently, the time contributions add up.

All of these propagation times are estimated based on the distances to travel. The propagation time is an increasing function of the length thereby traveled.

According to a first approximation, this function may be linear depending on the distance to travel.

As seen above, in a network, a path is non-homogenous. It includes nodes, each roughly a point, and links made up of long homogeneous links of cables (copper or optical fiber). This non-homogeneity results in a non-linear propagation time. Detailed analyses have shown that the contribution of the distance traveled to the propagation time may be analyzed to a lesser extent by a linear contribution due to the cables, but to a much greater extent by a point-by-point contribution within the nodes. One advantageous approximation consists of estimating, with respect to the propagation time, a distance along the path, by means of the number of nodes, or its equivalent, the number of links, also known as "spans," constituting said path. This amounts to ignoring the influence of the variation in length from one link to another, prioritizing the influence of the node on the time. The propagation time of a notification or configuration order along the path is thereby advantageously estimated by an increasing function of the number of nodes of said path. This function may, as a first approximation, be linear.

Staying with the example, the length of the restoration notification path C2, is for the node N7, the shortest path linking N11 to N7, or a notification path length equal to 1.

In addition to the contribution, a contribution should be added related to the length of the restoration connection segment coming from N7, i.e. the connection N7-N9-N10-N11 with 4 nodes. These two values 1 and 4 makes it possible to estimate a value indicative of the propagation time, as a sum of a notification time making it possible to transmit the breakdown information from the node detecting said breakdown to the input node of the restoration connection and a configuration/activation time of the nodes of said restoration connection, by cumulatively progressing along the restoration connection, from the input node to the output node.

Analogously, we obtain for N5: 2 and 5 and for N2: 3 and 7.

According to one illustrative embodiment, the optimization method uses an evaluation function of each candidate node that takes into account the parameters representative of both of the times (processing and propagation) being considered.

Said function is, as an example, a function with the format R(x,y1,y2)=Ax+By1 +Cy2. The first variable, x, is the number of connections to restore traveling through said node to be evaluated, and is therefore indicative of the control load of said node and of the processing time needed for restoration. This variable is assigned a coefficient A which is a number indicative of a processing time of a connection to be restored. Thus A.x is indicative of the processing time.

The second variable y1 is the length of the notification path, calculated as the number of nodes or links that make up the path used to report the breakdown. It is assigned a coefficient B which is a number indicative of an elementary, cumulative transmission time, from one node to a neighboring node, of a breakdown notification. Thus B.y1 is indicative of the breakdown notification time.

The third variable y2 is the length of the restoration connection, calculated as the number of nodes or links that make up the restoration connection. It is assigned a coefficient C which is a number indicative of an elementary configuration time for one node of a restoration connection, it being understood that the activation of a restoration connection is necessarily carried out gradually, one node after another along the restoration connection, from the input node to the output node.

By way of example, for the remainder of the description, a function R is assumed whereby A=5, B=2, and C=2. Such a function is depicted in Figure 2. The curve is a compromise and results from two contradictory influences. A Cartesian diagram showing the distance traveled on the x-axis 10 and the time on the y-axis 11 depicts: both the processing time 12 that decreases as a function of the distance between the node in question and the breakdown, because increasing that distance also goes along with a decrease in the number of connections x to be processed, and also the propagation time 13 that increases with distance. The total restoration time is obtained by adding these two contributions to obtain the curve 14. This curve 14 exhibits an optimal (minimal) time 15. For each candidate node, this function R is evaluated, and the node for which the value of R is minimal is adopted. Using Figure 2 as a graph, the values x, y1 and y2 are determined for each of the candidate nodes. These nodes are placed on the diagram and the node closest to the minimum point 15 is adopted.

A first node is determined from among the upstream nodes to determine the input node of the restoration connection. A second node is determined from among the downstream nodes to determine the output node of the restoration connection.

To return to the example being considered, in order to restore the connection C2 following its interruption by a breakdown in the link N7-N11, it is determined from among the nodes of C2, (N2, N5, N7, N 11, N13) a set of upstream nodes: (N2, N5, N7) a set of downstream nodes: (N11, N13).

By applying the method to the downstream nodes, it is respectively obtained for N7: x=4, y1=1 and y2=4, for N5: x=3, y1=2 et y2=5, for N2: x=2, y1=3 and y2=7. For each of these nodes, the evaluation function R(x,y1,y2)=5x+2y1+2y2 is decisive. R(N7)=30, R(N5)=29, and R(N2)=30. The node N5 for which R is minimal is adopted as the restoration connection's input node. By analogy, using the graph in Figure 2, three nodes are placed, the node N5 is adopted because it is the closest to the minimum point 15.

Proceeding in like fashion among the downstream nodes, the node N11 is adopted to be the output node of the restoration connection.

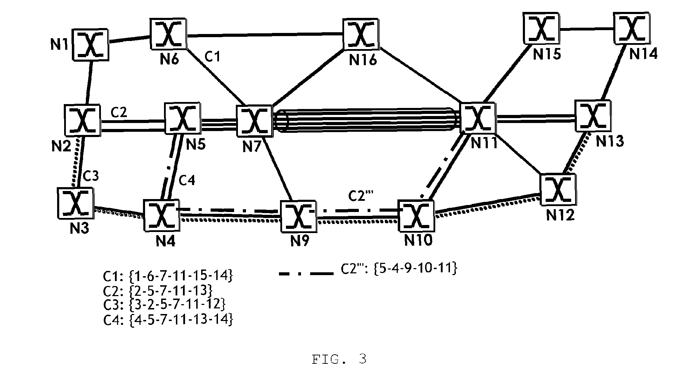

Based on these two input N5 and output nodes N11, a path linking them may be determined. Figure 3 ultimately depicts an optimal restoration connection C2"' obtained according to the method, where C2"': N5-N4-N9-N10-N11.

The coefficients A, B, and C may respectively be determined based on the relative processing characteristics (for example, the power of the processing units) and propagation characteristics (for example, the average propagation speed and average size of a span) of the network to which the method is applied, making a distinction, if need be, between the breakdown notification time and the restoration connection's activation time.

The method described in this way may be implemented in a centralized or distributed fashion, by any unit capable of carrying out the computation processing needed for the method, for example within at least one node controller or one centralized network management device.

The characteristics of the connection to be protected and the other connections established within the network, particularly their paths and their component elements, may be made available to the processing device by means of a traffic engineering database configured within an appropriate data storage device. Possible implementations of such a database are well-known in networks incorporating centralized connection management functions or connection control functions distributed on GMPLS network element controllers.

## Claims

1. A method for determining, within a communication network (1) comprising nodes (N1-N16) connected by links and within a connection (C1-C4, C2', C2", C2"') comprises a continuous and alternating succession of nodes and links connecting a source node (N2) and a destination node (N13), a restoration connection (C2"') at least partially replacing an original connection (C2) interrupted by a breakdown of one of its nodes or links (N7-N11), comprising the steps of:
- determining an input node (N5) of said restoration connection (C2"') among the nodes (N2, N5, N7) of said original connection (C2) located upstream of the interruption (N7-N11),
- determining an output node (N11) of said restoration connection (C2"') among the nodes (N11, N13) of said original connection (C2) located downstream of the interruption (N7-N11),
- determining a restoration connection (C2"') linking said input node (N5) to said output node (Nil) while bypassing the broken-down node/link (N7-N11).
***characterized in that*** the input node (N5) of said restoration connection (C2"') is the candidate node that minimizes a restoration time,
and **in that** the output node (N11) of said restoration connection (C2"') is the candidate node that minimizes a restoration time, wherein said restoration time for a node is estimated by adding a restoration processing time to a restoration order propagation time, said restoration processing time being estimated by means of an increasing function of the node's control load, said restoration order propagation time being estimated by means of an increasing function of the length of the path used to report the breakdown and the length of the restoration connection path.

2. A method according to claim 1, wherein the node's control load is indicated by the number of connections (C1-C4) to be restored travelling through said node.

3. A method according to claim 1 or 2, wherein the length of the notification path and the length of the restoration connection are indicated by the number of nodes or links that make up said path or said connection.

4. A method according to any one of the preceding claims, wherein the restoration time for a given node is calculated by means of a function
R(x,y1,y2)=Ax+By1 +Cy2, where
- x is the number of connections to be restored traveling through said node and
- y1 is the number of nodes or links that make up the path used for reporting the breakdown,
- y2 is the number of nodes or links that make up the restoration connection,
- A is a number indicative of a processing time of the connection to be restored,
- B is a number indicative of a transmission time to a neighboring node of a breakdown notification,
- C is a number indicative of a configuration time of a node of a restoration connection.

5. A method according to claim 4, wherein A=5, B=2 and C=2.

6. A system for determining, within a communication network (1) comprising nodes (N1-N16) connected by links and within a connection (C1-C4, C2', C2", C2"') comprises a continuous and alternating succession of nodes and links connecting a source node (N2) and a destination node (N13), a restoration connection (C2"') at least partially replacing an original connection (C2) interrupted by a breakdown of one of its nodes or links (N7-N11), comprising:
- a means for determining an input node (N5) of said restoration connection (C2"') among the nodes (N2, N5, N7) of said original connection (C2) located upstream of the interruption (N7-N11),
- a means for determining an output node (N11) of said restoration connection (C2"') among the nodes (N 11, N13) of said original connection (C2) located downstream of the interruption (N7-N11),
- a means for determining a restoration connection (C2"') linking said input node (N5) to said output node (Nil) while bypassing the broken-down node/link (N7-N11)**. *characterized in that*** the means for determining an input node is capable of selecting the candidate node that minimizes a restoration time,
and **in that** the means for determining an output node is capable of selecting the candidate node that minimizes a restoration time,
said restoration time for a node being estimated by adding a restoration processing time to a restoration order propagation time.
said restoration processing time being estimated by means of an increasing function of the node's control load,
said restoration order's propagation time is estimated by means of increasing function of the length of the path used for the reporting of the breakdown and the length of the restoration connection.
